# EUROPEAN PATENT SPECIFICATION

(11) **EP 0 398 894 B1**
(45) Date of publication and mention of the grant of the patent: **21.04.1993**
(21) Application number: 89900354.5
(22) Date of filing: 13.12.1988
(51) Int. Cl.: A01D 34/70

(54) **A LAWN-MOWER HAVING A COLLECTOR**
GRASMÄHER MIT SAMMELVORRICHTUNG
TONDEUSE A GAZON A COLLECTEUR

(30) Priority: 14.12.1987 SE 8704969
(43) Date of publication of application: 28.11.1990
(73) Proprietor: DAHLMANS KLIPPO AB, S-212 28 Malmö (SE)
(72) Inventor: DAHLMAN, Karl, F-66000 Perpignan (FR)
(74) Representative: Holmqvist, Lars J.H.
(86) International application number: SE8800677
(87) International publication number: WO8905573

(56) References cited:
- EP-A- 0 031 158
- DE-A-20 324 83
- US-A- 2 641 100
- US-A- 2 760 327
- US-A- 3 029 582
- US-A- 3 893 284
- US-A- 4 149 362

## Description

### Field of the invention

The present invention relates to a lawn-mower according to the preamble of claim 1.

### Technical background

When a lawn is mown it is often desirable to cellect the mown grass. To facilitate this collecting and to save time, in that the lawn does not need to be raked, it is today usual to provide the lawn-mower with different types of collecting means.

Lawn-mowers having grass-collectors, presently on the market, in most cases work satisfactorily as long as the grass is dry and does not be stickly. However, all lawn-mowers known by us, having a collector, have some kind of connection, e.g. in the form of a tube between the machine itself and the collector. If the grass is wet and stickly, it will stick to the walls of this connecting member, and may even fill it completely. Besides, if one is not attentive to when the collector is getting full, the connecting member will be completely filled, and since grass is continually being filled from the mower, the grass in the connecting member will be hard-stuffed, which makes it difficult to remove. Even if the connecting member is not stuffed, a quantity of grass will generally stick, which has to be removed manually so as not to block the continuous collecting.

The US Patent No. 4 149 362 shows a combined lawn mower and grass collector including a rotary type mower having a rearwardly directed discharge opening and a grass catcher mounted on the mower. The front portion of the catcher, attached to the mower, and the corresponding part of the mower have a planar configuration. This means that the mowed grass have to pass through connecting members in form of said front portion of the catcher and a mower discharge opening before it reaches the catcher itself.

Since thus there is typically an amount of grass in the connecting member between the machine and the collector, all grass does not come with the collector when this is removed for emptying. It is of cource desirable to get all the mown grass to actually land in the collector and to have it remain there when the collector is removed from the lawn-mower for emptying.

For security reasons it is also important to avoid any situation in which to risk someone putting his hand into the machine when it is running. Since it is necessary in collectors previously known to manually remove some grass, there is a risk of doing so without first cutting off the engine of the lawn-mower. This is avoided in an embodiment according to the present invention, since there is no grass to remove.

Thus, there is a need for making a lawn-mower having a collector which is void of a "narrow" connection between the machine and the collector. Besides, the collector should be easy to handle, i.e. easy to attach to the machine and easy to empty.

### Summary of the invention

The lawn-mower according to the present invention has a superstructure curved after the radius of the knife, enabling it to connect a grass-collector, having the same curvature, adjacent to the knife system.

This makes the collector more efficent than those previously known, since you are spared any transportation distance for the mown grass which often is both wet and sticky.

### Brief description of the drawings

Fig. 1 shows in side view a lawn-mower having a collector according to the present invention.

Fig. 2 is a cross section taken along line A-A in Fig 1.

Fig. 3 is a cross section taken along line B-B in Fig. 2 with the collector removed.

### Detailed description of the invention

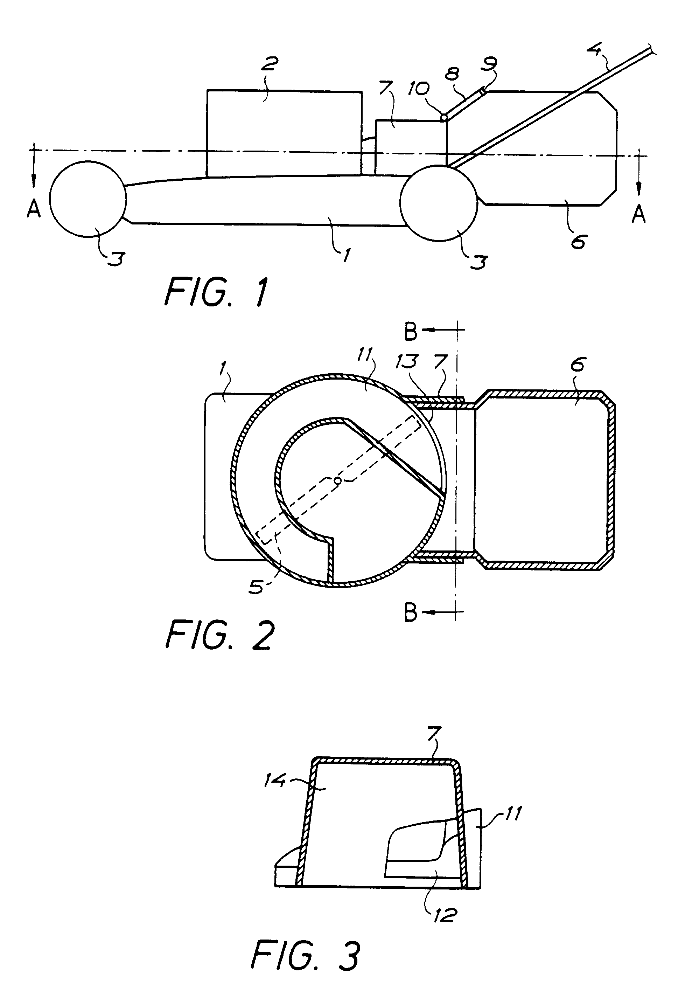

The invention will now be described with reference to Figs. 1 - 3.

The lawn-mower according to the present invention is built essentially as an ordinary lawn-mower and has a casing 1, four wheels 3, a handle 4, a knife 5, and a grass-collector 6. For attachment of the removable grass-collector 6 the back part of the casing 1 constitutes a curved superstructure 7. If the lawn-mower is not being used a flap 8 is shut down in front of an opening 14 in the back part of the superstructure 7 by means of a spring (not shown). The flap 8 is attached to the superstructure 7 through a hinge 10 and is furthermore provided with a locking means 9 which, if need be, cooperates with corresponding parts of the grass-collector 6. In order to throw the mown grass backwards the casing 1 is provided with a downwardly open passage 11 with an opening 12 mouthing in the opening 14 of the superstructure 7.

In using a lawn-mower of this type the grass mown by the knife 5 is sucked upwards and transported through the passage 11 backwards so as finally to be thrown out through the mouth 12 of the passage 11, whereupon it can be collected.

By the front edge 13 of the grass-collector as well as the superstructure 7 of the casing 1 being circular, the front edge 13 of the collector 6 reaches immediately up to the outer turning radius of the knife 5 when the collector 6 is mounted on the lawn-mower. The mown grass is thus thrown from the passage 11 and its opening 12 directly into the grass-collector 6 without first passing any transportation distance e.g. in the form of a tube. In such tubes or the like the grass will easily stick, especially if it is wet and sticky, and sticking grass must be manually removed, which entails the risk of doing so without first cutting off the machine.

Due to the grass-collector 6 reaching as far as to the knife system all grass will come out when the collector 6 is removed for being emptied. In systems according to prior art it is necessary to manually remove the grass that always sticks in the transportation to the collecting unit.

The superstucture 7 of the casing 1 has a spring biased flap 8 covering the back opening 14 of the superstructure 7 when the grass-collector 6 is not mounted. Thus, the lawn-mower can be used even without the collector 6 being mounted.

As an extra precautionary measure the last part of the passage 11 before the mouth 12 has a downwards directing effect on the material in the passage 11 by its roof sloping downwards.

## Claims

1. A lawn-mower having a grass-collector (6), the mower having a casing (1) with a downwardly open passage (11) mouthing (12) backwards towards the collector,
**characterized** by a curved superstructure (7) on the back part of the casing (1) for attachment of the collector (6), both the curved superstructure (7) facing the collector and the front edge (13) of the collector (6) having a curvature corresponding to the outer turning radius for knife (5) of the mower, the front edge (13) of the grass-collector (6) being adjacent to the knife system when the collector is mounted.

2. A lawn-mower according to claim 1,
**characterized** in that the last part of the roof of the passage (11) before the mouth (12) is sloping somewhat downwards.

## Patentansprüche

1. Rasenmäher mit einem Grassammler (6), wobei der Rasenmäher ein Gehäuse (1) mit einem nach unten öffnenden Durchgang (11) aufweist, welcher rückwärts zu dem Sammler hin mündet (12), gekennzeichnet durch eine gekrümmte Überstruktur (7) an dem rückwärtigen Teil des Gehäuses (1) zur Anbringung des Sammlers (6), wobei die gekrümmte Überstruktur (7), welche dem Sammler zugewandt ist, und die Vorderkante (13) des Sammlers (6) eine Krümmung aufweisen, die dem äußeren Drehradius für das Messer (5) des Rasenmähers entspricht, und weiter die Vorderkante (13) des Grassammlers (6) angrenzend zu dem Messersystem ist, wenn der Sammler angebracht ist.

2. Rasenmäher nach Anspruch 1, gekennzeichnet dadurch, daß der letzte Teil des Daches des Durchgangs (11) vor der Mündung (12) etwas nach unten geneigt verläuft.

## Revendications

1. Tondeuse à gazon à collecteur d'herbe (6), la tondeuse comportant un corps (1) à passage ouvert versle bas (11) débouchant vers l'arrière (12), vers le collecteur,
caractérisée en ce qu'elle comprend une superstructure courbe (7) solidaire de la partie arrière du corps (1) pour la fixation du collecteur (6), la superstructure courbe (7) en regard du collecteur et le bord avant (13) du collecteur (6)ayant tous deux une courbure qui correspond au rayon extérieur de rotation de la lame (5) de la tondeuse, le bord avant (13) du collecteur d'herbe (6) étant proche du système de coupe lorsque le collecteur est monté.

2. Tondeuse suivant la revendication 1,
caractérisée en ce que la dernière partie du toit du passage (11) avant l'embouchure(12) est légèrement inclinée vers le bas.
